# EUROPEAN PATENT APPLICATION

(11) **EP 3 299 129 A1**
(43) Date of publication of application: **28.03.2018**
(21) Application number: 17192602.5
(22) Date of filing: 22.09.2017
(51) Int. Cl.: B25J 9/16

(54) **ROBOT CONTROL DEVICE, ROBOT, AND ROBOT SYSTEM**

(30) Priority: 26.09.2016 JP 2016186599
(71) Applicant: Seiko Epson Corporation, Tokyo 160-8801 (JP)
(72) Inventor: Takeuchi, Kaoru, Nagano, 392-8502 (JP)
(74) Representative: Hoffmann Eitle

(57) **Abstract**

A robot control device determines that a control target of force control is achieved, based on two conditions made up of a range condition in the case where an output from a force detection unit provided in a robot is within a predetermined range and a continuation condition in the case where a state that satisfies the range condition is continued.

## Description

### BACKGROUND

### 1. Technical Field

The present invention relates to a robot control device, a robot, and a robot system.

### 2. Related Art

According to the related art, a robot which carries out work while performing force control to adjust a force acting on a robot to a target force is known. In the robot, if an excessive force due to an unexpected movement acts on a target object, it may cause damage to the target object or the robot. Therefore, it is common that control is performed so that an excessive force will not act. For example, JP-A-2008-188722 discloses a technique of stopping a robot if the current force value is equal to or above a designated force value.

In the related-art technique, the action of an excessive force is prevented by stopping the robot if the current force exceeds a reference level in force control. However, with such control alone, the robot may be stopped even when normal control can be performed. For example, in force control, if a significantly greater force than a target force acts momentarily, that force may be subsequently converged to the target force. In the related-art technique, even such a momentary increase of the force beyond the target force may be regarded as abnormal.

Also, according to the related art, in the process of certain work, it is often the case that the work is regarded as complete when a force acting on the robot has reached a target force. However, with the configuration where the work is regarded as complete simply based on the fact that the force has reached the target force, it cannot be guaranteed that required processing conditions are satisfied.

### SUMMARY

A robot control device according to an aspect of the invention determines that a control target of force control is achieved, based on two conditions made up of a range condition in the case where an output from a force detection unit provided in a robot is within a predetermined range and a continuation condition in the case where a state that satisfies the range condition is continued.

That is, if the state where the output from the force detection unit is within the predetermined range is continued, it is determined that the target of force control is achieved. Therefore, the case where the output from the force detection unit momentarily becomes an abnormal value and is subsequently converged to the target output need not be regarded as error. Also, it is determined that the target is achieved, if not only the output from the force detection unit satisfied the range condition but also the state that satisfies the range condition is continued. Therefore, if the range condition is satisfied for a short period of time but not satisfied over a period that is long enough to meet processing conditions, it is not determined that the control target of force control is achieved. Thus, it can be guaranteed that a processing condition that a predetermined target force is made to act for a predetermined period of time or longer is satisfied.

The continuation condition may be prescribed by a time period for which the state where the output is within the range is continued. With this configuration, it can be easily determined whether the state that satisfies the range condition is continued or not.

If the number of times the output departs from the range reaches a predetermined number of times within the continuation condition, the determination on whether the control target is achieved or not may be ended. With this configuration, an abnormality can be specified early.

The determination on whether the control target is achieved or not may be carried out in a predetermined achievement determination section. With this configuration, the determination on whether the control target is achieved or not can be carried out, excluding a section where it is difficult to determine the magnitude of the target force in force control. Therefore, it can be easily determined whether the control target is achieved or not.

### BRIEF DESCRIPTION OF THE DRAWINGS

The invention will be described with reference to the accompanying drawings, wherein like numbers reference like elements.
FIG. 1 is a perspective view of a robot.
FIG. 2 is a functional block diagram of a robot control device.
FIG. 3 is a flowchart of control target determination processing.
FIG. 4 shows an example of a current force.
FIG. 5 shows an example of a current force.
FIG. 6 shows the movement speed of an object to be controlled.

### DESCRIPTION OF EXEMPLARY EMBODIMENTS

Hereinafter, embodiments of the invention will be described in the following order with reference to the accompanying drawings. Components corresponding to each other in the individual illustrations are denoted by the same reference signs and the description of the same components will not be repeated.
(1) Configuration of robot
(2) Configuration of robot control device
(3) Control target determination processing
(4) Other embodiments

### (1) Configuration of robot

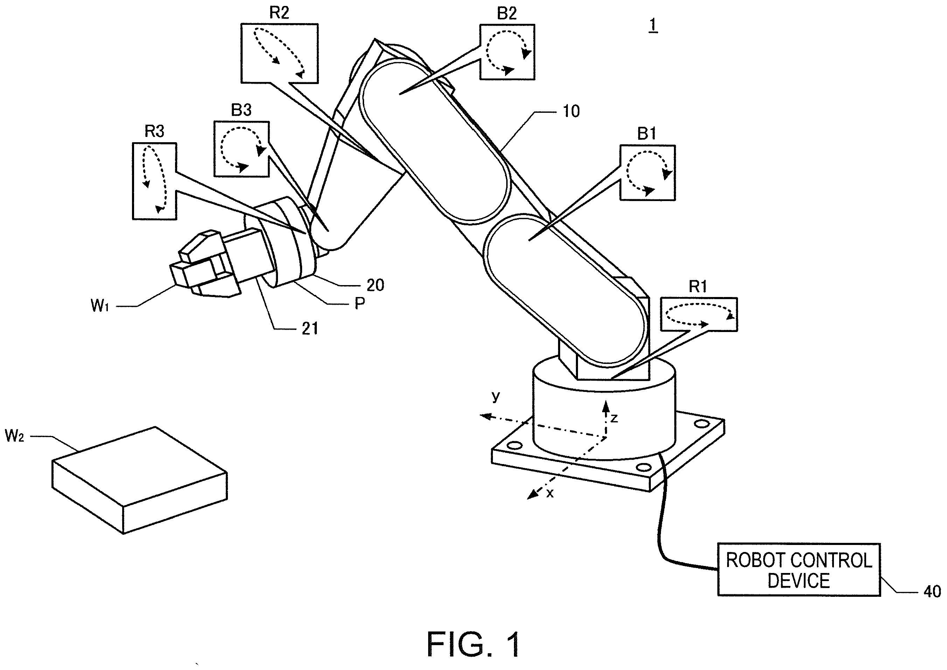

FIG. 1 is a perspective view of a robot 1 according to an embodiment of the invention. As shown in FIG. 1, the robot 1 has an arm 10 and an end effector 20. The arm 10 is a 6-axis arm having three bending joints B1 to B3 and three twisting joints R1 to R3. The bending joints B1 to B3 are joints which rotate about an axis orthogonal to the direction of the length of the arm 10. The twisting joints R1 to R3 are joints which rotate about an axis in the direction of the length of the arm 10. The arm 10 has a motor (not illustrated) as a drive unit for actuating the bending joints B1 to B3 and the twisting joints R1 to R3.

The end effector 20 is installed at the distal end of the arm 10. By driving the 6-axis arm 10, the robot 1 can arrange the end effector 20 at an arbitrary position and an arbitrary attitude (angle) within an available movement range. The end effector 20 has a force sensor P and a gripper 21. The force sensor P is a sensor which measures forces on three axes acting on the end effector 20 and torques acting around the three axes. The force sensor P may also be installed at a fixed part of the robot 1 as well as a moving part such as the end effector 20 or the arm 10. For example, a configuration in which the force sensor P is provided on a bottom plate of a robot main body, between the bottom plate of the robot main body and a plate where the robot is installed, may be employed. In the description below, an example in which the force sensor P is installed on the end effector 20 as shown in FIG. 1 will be described.

The robot 1 is a general-purpose robot which performs teaching and thus enables various kinds of work. In this embodiment, the case where teaching to carry out adhering work in which a workpiece W₁ is adhered to a workpiece W₂ is performed and where this adhering work is carried out will be described as an example. That is, the robot 1 moves the gripper 21 to the stock position of the workpiece W₁, picks up the workpiece W₁ coated with an adhesive with the gripper 21, and carries the workpiece W₁ to the space above the workpiece W₂. The robot 1 then carries out the work of pressing and adhering the workpiece W₁ to a predetermined position on the workpiece W₂.

For the work of adhering the workpiece W₁ to the workpiece W₂, a rule on the normal completion of the work is provided. That is, if the state where the workpiece W₁ is pressed against the workpiece W₂ with a force within a predetermined range is maintained for a predetermined period or longer, the adhering is regarded as normally completed. In this embodiment, the robot 1 is connected to a robot control device 40 and controlled by the robot control device 40. Therefore, the robot 1 and the robot control device 40 together form a robot system.

### (2) Configuration of robot control device

The robot control device 40 has a program execution unit (CPU, RAM, ROM and the like), not illustrated. The robot control device 40 can input and output signals via an interface, not illustrated, and can acquire an output from the force sensor P installed on the end effector of the robot 1 and output a control signal to control each motor provided in the arm 10.

The robot control device 40 can function as an output acquisition unit 41, a control unit 42, and a control target determination unit 43 by executing a predetermined program, and can control the robot by these functions. The output acquisition unit 41 is the function of acquiring an output from a force detection unit (force sensor P) provided on a moving part (arm 10) of the robot 1. That is, the robot control device 40 acquires an output from the force sensor P at every arbitrary timing by the function of the output acquisition unit 41.

The control unit 42 is the function of controlling operations of the robot 1. That is, the robot control device 40 can execute force control to adjust a force acting on the robot 1 to a target force and position control to adjust the position of the robot 1 to a target position, by the function of the control unit 42. Specifically, the robot control device 40 can specify a force acting on a TCP (tool center point: a reference site moving with the gripper 21), based on an output from the force sensor P, and can control each joint of the arm 10 so that this force becomes a target force.

That is, the force sensor P can detect forces in three axial directions on a local coordinate system (not illustrated) fixed on a predetermined TCP, and torques around the three axes. The local coordinate system can be defined in various ways. However, the local coordinate system can be defined, for example, by two axes parallel to the direction in which the gripper 21 extends and the direction in which the gripper 21 opens and one axis perpendicular to these two axes. The robot control device 40 acquires an output from the force sensor P and detects a force acting on the TCP via an object held by the gripper 21.

Meanwhile, the positions of the arm 10, the end effector 20, the gripper 21, and the TCP of the robot 1 are defined on a robot coordinate system (orthogonal xyz coordinate system shown in FIG. 1). The relationship between the robot coordinate system and the local coordinate system is specified in advance. Thus, if the force detected by the force sensor P is not the target force, the robot control device 40 acquires an amount of driving of the arm 10 (amount of control of a motor) to realize the state where the target force is detected, based on the relationship between the coordinate systems.

The robot control device 40 then outputs a control signal to a motor, thus actuates the motor according to the amount of control, and changes the position of the arm 10 of the robot 1 in order to realize the target force. The amount of control of the motor may be decided by various methods. For example, a configuration in which the amount of control is decided by impedance control, or the like, can be employed. Of course, the robot control device 40 may control the arm 10 in such a way that a torque outputted from the force sensor P becomes a target torque.

The robot control device 40 can control each joint of the arm 10 by the function of the control unit 42 in such a way that the position of the TCP becomes a target position and that the attitude of a site including the TCP becomes a target attitude. That is, the position of the TCP is decided based on the directions of the axes on the robot coordinate system, and the attitude of the site including the TCP is decided based on the directions of the axes on the local coordinate system. The movement of each arm 10 that is necessary for the TCP to be situated at an arbitrary position on the robot coordinate system within the available movement range and for the TCP to have an arbitrary attitude is specified in advance.

When the target position and the target attitude of the TCP on the robot coordinate system are specified, the robot control device 40 acquires an amount of driving of the arm 10 (amount of control of the motor), based on the target position and the target attitude. The robot control device 40 then outputs a control signal to the motor and thus actuates the motor according to the amount of control. Of course, in this control, the amount of control of the motor may be acquired by feedback control such as PID (proportional-integral-derivative) control.

In this embodiment, the user can designate an operation of the robot 1 by a command to the robot 1. That is, the user can input a command designating a work sequence of the robot 1, using an interface (general-purpose computer, teaching pendant or the like), not illustrated. The robot control device 40 controls the robot 1 according to the command by the function of the control unit 42.

In the configuration described above, the robot control device 40 determines, by the function of the control target determination unit 43, whether the force indicated by an output from the force sensor P has reached a target force or not, based on a predetermined determination condition. Specifically, the robot control device 40 determines, by the function of the control target determination unit 43, that the control target of force control is achieved if two conditions made up of a range condition in the case where an output from the force sensor P is within a predetermined range and a continuation condition in the case where a state that satisfies the range condition is continued are satisfied. If the two conditions are not satisfied, it is not determined that the control target of force control is achieved.

That is, in this embodiment, the robot control device 40 determines that the control target is achieved if the state where the force acting on the TCP is the target force is maintained continuously. In this embodiment, the range condition is defined by the prescribing an upper limit value and a lower limit value of a force for each direction of the force acting on the TCP by force control. Thus, in the adhering work, the direction of a force and the range of values of the force at the time of pressing the workpiece W₁ against the workpiece W₂ are set as the range condition. The continuation condition is defined by the duration from when the state that satisfies the range condition is realized. Thus, in the adhering work, the period for which the workpiece W₁ should be pressed against the workpiece W₂ with a force within a predetermined range is set as the continuation condition. The range condition and the continuation condition are recorded in advance in a not-illustrated recording medium as determination condition information.

The determination condition information can be defined in various forms. In this embodiment, the determination condition can be defined by a command to the robot 1. That is, in this embodiment, a correspondence can be established between the command designating the work sequence of the robot 1 and a parameter. As this parameter, the range condition and the continuation condition can be set. For example, the range condition can be set by establishing a correspondence between a command designating a target force in force control, and upper and lower limit forces as parameters. The continuation condition can be set by establishing a correspondence between this command and a period as a parameter.

The achievement of the control target may refer to the completion of a work process that involves force control. If the control target is achieved, the control is regarded as normally ended. Therefore, if the next work exists, the robot shifts to the next work. If there is no next work, the work by the robot ends. If the control target is not achieved, the control is regarded as abnormal. Therefore, various kinds of work to cope with the abnormality are started. The work to cope with the abnormality may be, for example, error processing, stopping the robot, retry of the work regarded as abnormal, and the like.

With the configuration described above, if the state where an output from the force sensor P is within a predetermined range is continued, it is determined that the target of force control is achieved. Therefore, the case where the output from the force sensor P momentarily becomes an abnormal value and is subsequently converged to the target output need not be regarded as error. Also, it is determined that the target is achieved, if not only the output from the force sensor P satisfies the range condition but also the state that satisfies the range condition is continued. Therefore, if the range condition is satisfied for a short period of time but not satisfied over a period that is long enough to meet processing conditions, it is not determined that the control target of force control is achieved. Thus, if it is determined that the adhering work is completed, it can be guaranteed that the state where the workpiece W₁ is pressed against the workpiece W₂ with a force within a predetermined range is maintained for a predetermined period or longer.

### (3) Control target determination processing

Next, control target determination processing will be described in detail. The control target determination processing is executed when the robot control device 40 starts work which involves force control, by the function of the control unit 42. For example, in the adhering work, the control target determination processing is started when the workpiece W₁ is arranged in the space above the workpiece W₂ and starts moving in the state where a force that acts on both of the workpiece W₁ and the workpiece W₂ when the workpiece W₁ comes in contact with the workpiece W₂ is set as a target force to act on the TCP. Here, the adhering work is mainly described as an example. As the control target determination processing is started, the robot control device 40 acquires a range condition and a continuation condition for normal determination, by the function of the control target determination unit 43 (Step S100). That is, the robot control device 40 specifies a range condition and a continuation condition for determining whether the force control as an obj ect of determination is normally completed or not, referring to the determination condition information.

Next, the robot control device 40 acquires the range condition and the continuation condition for abnormality determination, by the function of the control target determination unit 43 (Step S105). In this embodiment, in addition to the determination that a force in force control is normal, it is determined that a force in force control is abnormal, based on the two conditions of the range condition and the continuation condition. Therefore, in the determination condition information, the range of an abnormal force is prescribed in advance as the range condition for abnormality determination. However, if the abnormal force acts momentarily, it is not regarded as abnormal. The force is determined as abnormal if the force acts over a specific period. Therefore, in the determination condition information, the specific period is prescribed in advance as the continuation condition for abnormality determination. Thus, referring to the determination condition information, the robot control device 40 specifies the range condition and the continuation condition for determining whether the force control as an object of determination is abnormal. The range condition for abnormality determination is a condition prescribing a different range from the range condition for normality determination. The continuation condition for abnormality determination may be the same as or different from the continuation condition for normality determination.

Next, the robot control device 40 acquires the current force by the function of the output acquisition unit 41 (Step S110) . That is, the robot control device 40 acquires an output from the force sensor P and acquires a force that acts on the TCP when the workpiece W₁ comes in contact with the workpiece W₂. If the workpiece W₁ is not in contact with the workpiece W₂, the current force is 0.

Next, the robot control device 40 determines whether the current force satisfies the range condition for normality determination or not, by the function of the control target determination unit 43 (Step S115). That is, the robot control device 40 compares the range condition acquired in Step S100 with the current force acquired in Step S110, and determines that the range condition is satisfied if the current force is included in the range indicated by the range condition.

If it is determined in Step S115 that the range condition for normality determination is satisfied, the robot control device 40 determines whether the current force satisfies the continuation condition for normality determination or not, by the function of the control target determination unit 43 (Step S120). That is, Steps S110 to S120 form a processing loop. The robot control device 40 measures the time elapsed from a shift from the state where the current force does not satisfy the range condition for normality determination to the state where the current force satisfies the range condition for normality determination. The robot control device 40 then compares the time elapsed with the continuation condition acquired in Step S100, and determines that the current force satisfies the continuation condition for normality determination if the time elapsed is equal to or longer than the period indicated by the continuation condition. If it is not determined in Step S120 that the current force satisfies the continuation condition for normality determination, the robot control device 40 repeats the processing of Step S110 and onward.

If it is determined in Step S120 that the current force satisfies the continuation condition for normality determination, the robot control device 40 ends the current process of work by the function of the control unit 42 (Step S140). That is, the robot control device 40 determines that the adhering work to adhere the workpiece W₁ to the workpiece W₂ is finished. Next, the robot control device 40 determines whether the next process exists or not, by the function of the control unit 42 (Step S145). That is, if there is work yet to be done in the work sequence designated by the command, the robot control device 40 determines that the next process exists.

If it is not determined in Step S145 that the next process exists, the robot control device 40 ends the control target determination processing. If it is determined in Step S145 that the next process exists, the robot control device 40 starts the next process of work by the function of the control unit 42 (Step S150) and executes the processing of Step S100 and onward.

Meanwhile, if it is not determined in Step S115 that the current force satisfies the range condition for normality determination, the robot control device 40 determines whether the current force satisfies the range condition for abnormality determination or not (Step S125). That is, the robot control device 40 compares the range condition acquired in Step S105 with the current force acquired in Step S110, and determines that the range condition is satisfied if the current force is included in the range indicated by the range condition.

If it is determined in Step S125 that the range condition for abnormality determination is satisfied, the robot control device 40 determines whether the current force satisfies the continuation condition for abnormality determination or not, by the function of the control target determination unit 43 (Step S130). That is, Steps S110, S115, S125 and S130 form a processing loop. The robot control device 40 measures the time elapsed from a shift from the state where the current force does not satisfy the range condition for abnormality determination to the state where the current force satisfies the range condition for abnormality determination. The robot control device 40 then compares the time elapsed with the continuation condition acquired in Step S105, and determines that the continuation condition for abnormality determination is satisfied if the time elapsed is equal to or longer than the period indicated by the continuation condition. If it is not determined in Step S130 that the current force satisfies the continuation condition for abnormality determination, the robot control device 40 repeats the processing of Step S110 and onward.

If it is determined in Step S130 that the current force satisfies the continuation condition for abnormality determination, the robot control device 40 outputs an error (Step S135) by the function of the control unit 42 and ends the work of the robot 1. The output of the error can be carried out by an arbitrary output unit. For example, an image output unit or an audio output unit or the like may output information indicating an error.

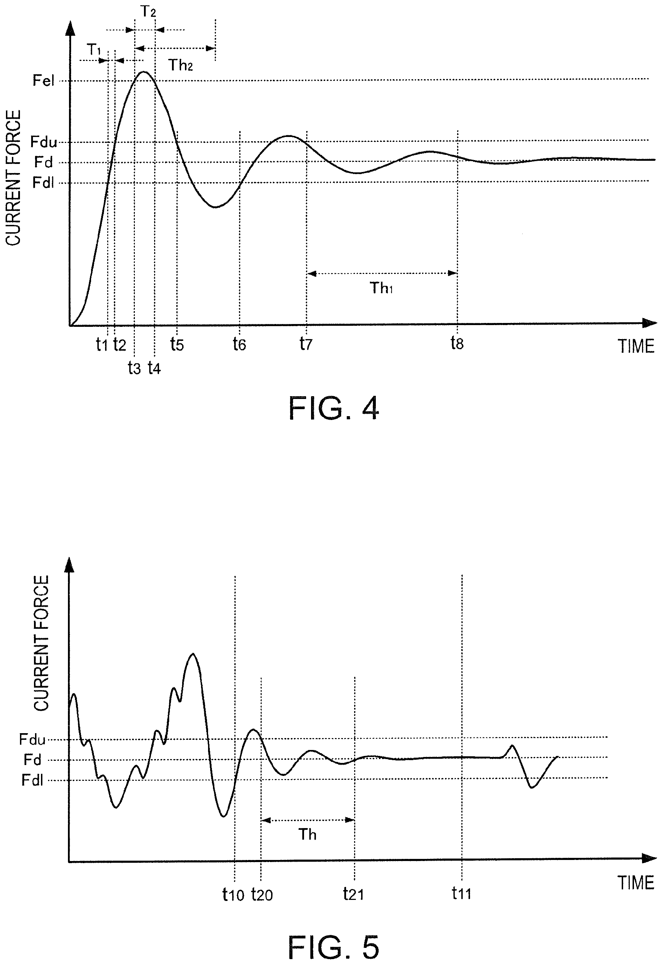

FIG. 4 explains an example of processing in the case where the foregoing flowchart is executed in the adhering work on the workpiece W₁. In FIG. 4, the range condition for normality determination is a range from a lower limit value Fdl to an upper limit value Fdu with a target force Fd in the middle. The continuation condition for normality determination is a period Th₁. Meanwhile, the range condition for abnormality determination is a range from a lower limit value Fel and above. The continuation condition for abnormality determination is a period Th₂. In FIG. 4, the horizontal axis represents time and the vertical axis represents the current force.

When the workpiece W₁ begins to come in contact with the workpiece W₂ in the adhering work, the current force suddenly increases as shown in FIG. 4. In this example, after this sudden increase, the current force is gradually converged to the target force Fd while fluctuating with the lapse of time. In the process of this change in the current force, after the current force satisfies the range condition at the initial stage, the state where the current force does not satisfy the range condition is established again without satisfying the continuation condition.

For example, at time t₁ immediately after the workpiece W₁ comes in contact with the workpiece W₂, the current force is Fdl or above and it is determined in Step S115 that the range condition for normality determination is satisfied. At this stage, it is not determined in Step S120 that the continuation condition for normality determination is satisfied. Therefore, the loop of Steps S110 to S120 is repeated. However, in the example shown in FIG. 4, at time t₂ after the lapse of a period T₁, the current force exceeds Fdu. The period T₁ is shorter than the period Th₁ indicated by the continuation condition for normality determination. Therefore, at this stage, it is not determined in Step S120 that the continuation condition for normality determination is satisfied and it is determined in Step S115 that the range condition for normality determination is not satisfied. Thus, the processing of Step S110 and onward is repeated without ending the current process of work.

During the time between t₂ and t₃, it is not determined in Step S115 that the range condition for normality determination is satisfied and it is not determined in Step S125 that the range condition for abnormality determination is satisfied. At time t₃, the current force reaches Fel or above and it is determined in Step S125 that the range condition for abnormality determination is satisfied. At this stage, it is not determined in Step S130 that the continuation condition is satisfied. Therefore, the loop of Steps S110, S115, S125 and S130 is repeated. However, in the example shown in FIG. 4, at time t₄ after the lapse of a period T₂, the current force drops below Fel. The period T₂ is shorter than the period Th₂ indicated by the continuation condition for abnormality determination. Therefore, at this stage, it is determined in Step S125 that the range condition for abnormality determination is not satisfied. Thus, the processing of Step S110 and onward is repeated without outputting an error.

Subsequently, at times t₅ and t₆, it is determined that the range condition for normality determination is satisfied, by the determination in Step S115. Since the state where this range condition is satisfied is not continued for the period Th₁ or longer, the processing of Step S110 and onward is repeated without ending the current process of work. However, after it is determined by the determination in Step S115 at time t₇ that the range condition for normality determination is satisfied, the state where the range condition is satisfied is continued for the period Th₁ or longer. Therefore, at time t₈, it is determined that the continuation condition for normality determination is satisfied. As a result, the robot control device 40 ends the current process of work in Step S140.

According to the processing described above, the state where an output from the force sensor P momentarily becomes an abnormal value beyond the lower limit value Fel need not be determined as error. The state where the force momentarily becomes an abnormal value but is subsequently converged to the target force as shown in FIG. 4 can be determined as normal. Moreover, in this embodiment, the range condition and the continuation condition for abnormality determination are set. Therefore, if the state where the current force is an abnormal value is not momentary but continues, this can be determined as abnormal and damage to the workpieces and the robot can be prevented. Of course, in the case where a force that must not act even for a moment can be defined, a configuration in which the robot is stopped if this force with a certain margin acts momentarily may be employed.

### (4) Other embodiments

The foregoing embodiment is an example for carrying out the invention. Various other embodiments can be employed as well. For example, the robot control device may be built in the robot or may be provided in a different place from the installation site of the robot, for example, in an external server or the like. Also, the robot control device may be configured to control a plurality of robots. The robot control device may be arranged, distributed to a plurality of devices. For example, a part of the robot control device may be built in the robot and the other part may be arranged in an external server or the like of the robot. Moreover, a part of the configuration in the embodiment may be omitted and the order of processing may be varied or abbreviated.

The robot may be able to move under force control and carry out work on a target object with a moving part in an arbitrary form. The target object may be an object which moves, linked with the movement of the moving part of the robot. The target object may be an object held by the end effector or a part of a tool (TCP or the like) provided on the end effector, and can be various objects.

The moving part may be configured to move relatively to the installation position of the robot and change attitude. The degree of freedom (number of moving axes or the like) is arbitrary. The robot may be in various forms such as orthogonal robot, horizontal multi-joint robot, vertical multi-joint robot, or dual-arm robot. Of course, various forms can be employed for the number of axes, the number of arms, the form of the end effector and the like.

The force detection unit may be able to detect a force which acts on the moving part of the robot and can be formed by an acceleration sensor or a gyro sensor or the like other than the force sensor. The force may be a translation force, a rotational force (torque), or a combination of these. The force may be directly detected or indirectly detected. As the latter case, a physical quantity that can be converted to a force, such as acceleration, position or speed, and a physical quantity that can result from the conversion of a force, such as time derivative of force, can be employed. Of course, the output from the force detection unit may be corrected. For example, whether the range condition is satisfied may be determined after correction such as filter processing for coordinate conversion, gravity compensation, or noise reduction.

The force acting on the moving part of the robot may be a force acting on the moving part itself of the robot or may be a force acting on a target object linked with the moving part of the robot (for example, an object, tool or the like held by the moving part). In any case, it suffices that a force that should be a specific target force in the process of work by the robot can be detected when this force acts on the robot.

The range condition may be prescribed in such a way that an output from the force detection unit can be regarded as an output corresponding to the target force. Therefore, the range condition may be prescribed by providing a predetermined margin for an output corresponding to the target force. The margin may be constant or variable. As the latter case, the margin may be variable depending on the target force and the work, or may be variable with time (range becoming narrower with the lapse of time or the like).

The continuation condition may be prescribed as the duration of the state that satisfies the range condition. The duration can be set based on various indicators. For example, a time interval or the like with which it can be regarded that the target of force control is achieved may be employed. Specifically, in the case of work which requires that the state where a force within a predetermined range acts on workpieces should be continued for a predetermined time or longer, such as adhering work to adhere workpieces together, this predetermined time can be a threshold for the continuation condition.

Moreover, one or both of the range condition and the continuation condition may be defined for each direction of force. For example, a force in the x-axis direction and a force in the y-axis direction may have different range condition and continuation condition from each other. Also, there may be a direction for which the range condition and the continuation condition are not set. On the same axis, different combinations of range condition and continuation condition may be provided at different times. For example, it may be determined that the control target is achieved if a force of 5 N is continued for five seconds and subsequently a force of 3 N is continued for ten seconds.

Moreover, if an output from the force detection unit satisfies the range condition but subsequently no longer satisfies the range condition without satisfying the continuation condition, whether the control target is achieved or not may be determined again, or the determination on whether the control target is achieved or not may be ended. In the former case, a condition for ending the determination in the case where the circumstance where the range condition is satisfied but subsequently becomes no longer satisfied is repeated may be set.

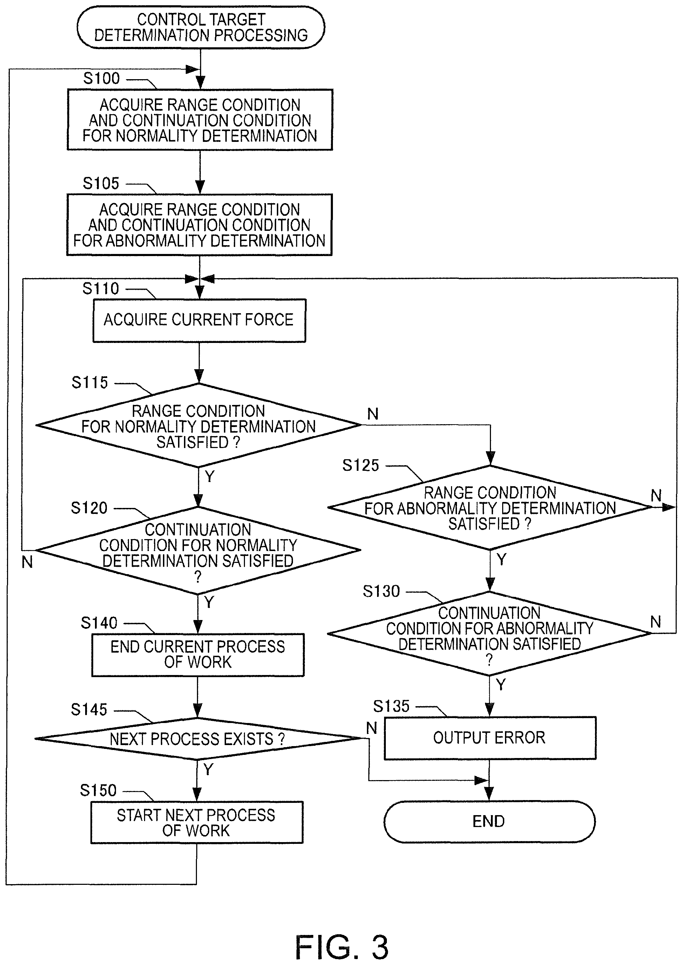

For example, a configuration may be employed in which the determination on whether the control target is achieved or not is ended if the number of times the output departs from the range reaches a predetermined number of times within the continuation condition. This configuration can be realized by modifying the control target determination processing shown in FIG. 3 in the above configuration. For example, a configuration may be employed in which a variable for counting the number of times is incremented if it is determined in Step S115 that the range condition for normality determination is satisfied but subsequently it is no longer determined in the process of the loop that the range condition for normality determination is satisfied. Then, if the variable reaches a predetermined number of times or above, the processing jumps to Step S135. With this configuration, the circumstance where the control target cannot be achieved or the circumstance where an excessively long time is needed to achieve the control target, such as the case where output is fluctuating, can be determined early as non-achievement of the target, and therefore an abnormality can be specified early. The predetermined number of times may be decided in advance. The number of times the repetition of the satisfaction and non-satisfaction of the range condition should be regarded as abnormal, or the like, may be decided in advance by experiment, statistics and the like.

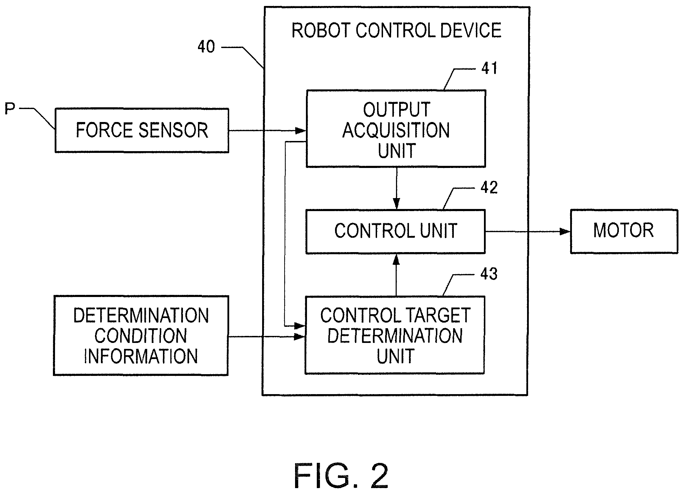

Also, whether the control target is achieved or not may be determined in a predetermined achievement determination section. The achievement determination section is decided as a section on a time axis or a section in a position space or the like. The determination on whether the control target is achieved or not is carried out in the achievement determination section but is not carried out in sections other than the achievement determination section. This configuration is realized by executing the control target determination processing shown in FIG. 3 in the achievement determination section, in a configuration similar to the foregoing configuration shown in FIGS. 1 and 2.

With this configuration, the determination can be carried out in a section where the determination is needed. Also, in carrying out force control, a section where it is difficult to achieve the control target and a section where a noise can occur can be excluded. For example, if a section at the beginning of force control or a section where a target object moves and causes an acceleration to act, thus causing an inertial force based on the acceleration to act on the target force in force control, or the like, is excluded from the achievement determination section, a section where it is difficult to determine the magnitude of the target force in force control can be excluded. Therefore, whether the control target is achieved or not can be easily determined.

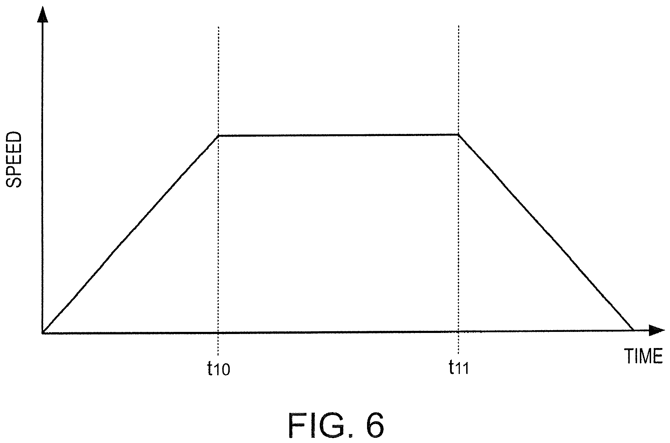

FIGS. 5 and 6 explain examples where an achievement determination section is set. FIG. 5 is a graph showing the current force acting on the TCP. The horizontal axis represents time. The vertical axis represents the current force. In this example, the target force in force control is Fd. The range condition for normality determination is a range from a lower limit value Fdl to an upper limit value Fdu with the target force Fd in the middle. The continuation condition for normality determination is a period Th (see FIG. 5). FIG. 6 is a graph showing the speed of the TCP. The horizontal axis represents time. The vertical axis represents speed. The work in this example is to perform force control while moving the TCP. In the process of this movement, as shown in FIG. 6, the TCP accelerates from the beginning of the work to time t₁₀. During a period between time t₁₀ and time t₁₁, the TCP moves at a constant speed. After time t₁₁, the TCP decelerates and stops.

In this way, in the process of acceleration and deceleration during the movement of the TCP, an acceleration or deceleration (negative acceleration) acts on the TCP, and an inertial force due to the acceleration or deceleration acts on the TCP. Therefore, even in the case where control is performed with a target force of Fd, in the process of acceleration and deceleration, an inertial force is applied to the current force, and in many cases, the current force becomes unstable as shown in FIG. 5. Thus, in such cases, it is preferable that the process of acceleration and deceleration is excluded and that the process of the TCP moving at a constant speed is defined in advance as an achievement determination section. When the achievement determination section is reached, the robot control device 40 starts the control target determination processing shown in FIG. 3.

In the example shown in FIG. 5, the period between time t₁₀ and time t₁₁ is the achievement determination section. As the control target determination processing is carried out in this period, the robot control device 40 determines that the range condition is satisfied, at time t₂₀. In the example shown in FIG. 5, the state where the range condition is satisfied is maintained until time t₂₁. Therefore, the robot control device 40 determines that the control target is achieved, at time t₂₁.

In the above example, the achievement determination section is specified according to the movement mode of the robot. However, the achievement determination section may be decided by various other elements. Also, accelerating, moving at a constant speed, decelerating and the like may be employed as the movement mode. A period of moving at a constant speed may be specified as the achievement determination section. Also, the achievement determination section may be defined by one or a combination of accelerating, moving at a constant speed, and decelerating.

As an example in which the achievement determination section is defined by elements other than the movement mode, for example, start time and end time may be specified based on the time elapsed from reference time (start time of movement, start time of a specific process of work, or the like). For example, a period from 0.5 seconds to 0.7 seconds after the start of force control may be specified as the achievement determination section. Also, the achievement determination section may be specified by a position in the space. For example, the space between a coordinate z₁ and a coordinate z₂ on the robot coordinate system or the like may be defined as the achievement determination section.

Also, the achievement determination section may be specified by the proportion of a period elapsed in a reference period. For example, a period T from the start to the end of force control may be defined as a reference period, and a period from the time when a period of 0.3T passes from the start time to the time when a period of 0.6T passes may be defined as the achievement determination section.

## Claims

1. A robot control device which determines that a control target of force control is achieved, based on two conditions made up of a range condition in the case where an output from a force detection unit provided in a robot is within a predetermined range and a continuation condition in the case where a state that satisfies the range condition is continued.

2. The robot control device according to claim 1, wherein
the continuation condition is prescribed by a time period for which the state where the output is within the range is continued.

3. The robot control device according to claim 1 or 2, wherein if the number of times the output departs from the range reaches a predetermined number of times within the continuation condition, the determination on whether the control target is achieved or not is ended.

4. The robot control device according to any one of claims 1 to 3, wherein
the determination on whether the control target is achieved or not is carried out in a predetermined achievement determination section.

5. A robot controlled by the robot control device according to any one of claims 1 to 4.

6. A robot system comprising the robot control device according to any one of claims 1 to 4 and a robot controlled by the robot control device.
